(19) **Europäisches Patentamt / European Patent Office / Office européen des brevets**

(11) **EP 2 612 702 B1**

(12) **EUROPEAN PATENT SPECIFICATION**

(45) Date of publication and mention
of the grant of the patent:
**15.04.2020 Bulletin 2020/16**

(21) Application number: **13150230.4**

(22) Date of filing: **04.01.2013**

(51) Int Cl.:
*B01D 67/00* (2006.01)     *C08J 5/18* (2006.01)
*C08J 9/26* (2006.01)      *C08K 5/01* (2006.01)
*H01M 2/16* (2006.01)

(54) **Microporous polyolefin film and method for preparing the same**

Polyolefinfilm mit Mikroporen und Verfahren zu seiner Herstellung

Film de polyoléfine microporeux et son procédé de préparation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2012 KR 20120001815**

(43) Date of publication of application:
**10.07.2013 Bulletin 2013/28**

(73) Proprietors:
• **SK Innovation Co., Ltd.**
  **Seoul 110-110 (KR)**
• **SK ie technology Co., Ltd.**
  **Jongno-gu**
  **Seoul**
  **03188 (KR)**

(72) Inventors:
• **Kang, Gwigwon**
  **Daejeon 305-509 (KR)**

• **Woo, Youngjun**
  **Daejeon 305-712 (KR)**
• **Kim, Hyungmin**
  **Seoul 151-770 (KR)**
• **Rhee, Jang-Weon**
  **Daejeon 302-762 (KR)**
• **Cheong, Sangbae**
  **Daejeon 305-761 (KR)**
• **Jung, Inhwa**
  **Chungcheongnam-do 330-873 (KR)**

(74) Representative: **Stolmár & Partner**
**Patentanwälte PartG mbB**
**Blumenstraße 17**
**80331 München (DE)**

(56) References cited:
**EP-A1- 1 097 961     EP-A1- 1 698 656
EP-A1- 2 060 599**

**Description**

**TECHNICAL FIELD**

The following disclosure relates to a microporous polyolefin film usable as a battery separator and a method for preparing the same, and more particularly, to a microporous polyolefin film prepared by improving a heat setting process during a wet process for enabling preparation of a microporous film and a method for preparing the same.

**BACKGROUND**

A microporous polyolefin film has been widely used as a battery separator, a separation filter, a microfiltration membrane, or the like, due to excellent chemical stability and superior physical properties thereof. Among them, a separator for a secondary battery is required to have safety of the battery and the highest level of product quality. Recently, with the trend of the secondary battery having higher capacity and higher output, the separator is further required to have high strength and high permeability and improve properties thereof for thermal stability and electrical safety of the secondary battery at the time of charging and discharging. In the case of a lithium secondary battery, high mechanical strength is required in order to improve safety during a battery manufacturing procedure and during the use thereof and high permeability is required in order to improve capacity and output. In addition, high thermal stability is required. For example, if the thermal stability of the separator is deteriorated, the short circuit between electrodes may occur due to damage or deformation of the separator, which is caused by temperature increase in the battery, resulting in increasing the risk of overheating of the battery or firing. In addition, as the application of the secondary battery is extended to hybrid electric vehicles and the like, it is an important requirement to secure safety of the battery regardless of overcharge, and the separator is required to have properties bearing electric pressure due to overcharge.

High strength prevents damage to the separator, which may occur during a battery manufacturing procedure, and damage to the separator, which may occur by dendrite or the like generated in the electrode during the charging and discharging procedure of the battery, and thus is needed in order to prevent short between electrodes. In addition, when the strength of the separator is weak at a high temperature, short circuit may occur due to film breakage. This may result in overheating, ignition, explosion, and the like due to short circuit between electrodes.

High permeability is needed in order to improve capacity and output of the lithium secondary battery. There is an increasing demand for a high-permeability separator with the trend that the lithium secondary battery is required to have high capacity and high output.

Thermal stability of the battery is affected by shutdown temperature, meltdown temperature, thermal shrinkage ratio, and the like of the separator. Among them, thermal stability of the battery is significantly affected by the thermal shrinkage ratio in the transverse direction. If the thermal shrinkage ratio in the transverse direction is large, an edge portion of the electrode is exposed in the transverse direction during a shrinking procedure, resulting in a short circuit between electrodes, and thus, overheating, ignition, explosion, and the like may occur. If the thermal shrinkage ratio in the transverse direction is great even though the meltdown temperature of the separator is high, edge of the electrode may be exposed during the procedure where the temperature of the separator is raised, and thus a short circuit between electrodes may occur.

Another important factor in safety of the secondary battery is overcharge safety of the battery. The overcharge safety means safety against leakage liquid of electrolyte, explosion, ignition, and the like, when the battery is overcharged to the higher voltage than suitable voltage during the charging procedure of the battery. This is an important requirement for safety of the battery, in the current state where the application of high-capacity and high-output battery is extended, such as hybrid electric vehicles and the like. It is not favorable that excessive large pores are present in the separator in consideration of improving overcharge safety of the secondary battery. Generally large pores help to improve lifespan and output of the battery, but if the pore size is larger than a predetermined size, the lifespan and the output are not further improved and safety of the battery, such as overcharge safety or the like, may be damaged. In addition, the pores have a distribution thereof in the forming procedure thereof. Due to this distribution, if the excessive large pores are formed in the separator, they act as a region that has weak resistance against electric pressure applied in the charging procedure of the battery, and thus deteriorate the overcharge safety of the battery.

Korean Patent Laid-Open Publication No. 2006-0103932 (Patent Document 1) discloses a separator having a narrow pore diameter distribution for high withstand voltage and excellent shutdown performance. However, if the size of the pore is excessively large, there are problems with safety of the battery, such as deterioration in the overcharge safety, occurring in actual batteries.

As described above, according to the related art, it is difficult to obtain high strength, high permeability, and low thermal shrinkage ratio in the transverse direction, which are required to improve performance and safety of a high-capacity and high-output secondary battery, and it is impossible to prepare a separator having pores of a predetermined size or smaller while obtaining high permeability and low thermal shrinkage ratio in the transverse direction.

[Related Art Document]

[Patent Document]

(Patent Document 1) Korean Patent Laid-Open Publication No. 2006-0103932

## SUMMARY

The present inventors have repeatedly conducted extensive research in order to solve the problems of the related art, and then developed a separator for a high-capacity and high-output battery having small pores while retaining strength (puncture strength), high permeability, and low thermal shrinkage ratio in a transverse direction.

According to the present invention, there is provided a microporous polyolefin film where one or more layers are laminated, wherein the microporous polyolefin film comprises a polyethylene layer having a maximum pore diameter of 0.083 $\mu$m or less, which is measured by a bubble point method, wherein the microporous polyolefin film has a thickness of 5-40 $\mu$m, a porosity of 30~60%, and a puncture strength of 0.25N/$\mu$m to 0.60N/$\mu$m; wherein the microporous film has a time to permeate gas in the range from 50 to 340 sec/(100 cc x 20 $\mu$m); and wherein a quality factor of the microporous film, which is defined by Equation 1 below, is 20gf/(sec/100cc) or greater.

$$[Equation\ 1]$$

$$Quality\ Factor\ (Q)\ =\ S\ /\ (P \times HS)$$

S: puncture strength (gf)
P: Time to permeate gas (Gurley, sec/100cc)
HS: shrinkage ratio (%) in transverse direction at 130°C for 1 hour

## DETAILED DESCRIPTION OF EMBODIMENTS

According to the present invention, there is provided a microporous polyolefin film where one or more layers are laminated, wherein the microporous polyolefin film comprises a polyethylene layer having a maximum pore diameter of 0.083 $\mu$m or less, which is measured by a bubble point method, wherein the microporous polyolefin film has a thickness of 5-40 $\mu$m, a porosity of 30~60%, and a puncture strength of 0.25N/$\mu$m to 0.60N/$\mu$m; and wherein a quality factor of the microporous film, which is defined by Equation 1 below, is 20gf/(sec/100cc) or greater.

$$[Equation\ 1]$$

$$Quality\ Factor\ (Q)\ =\ S\ /\ (P \times HS)$$

S: puncture strength (gf)
P: Time to permeate gas (Gurley, sec/100cc)
HS: shrinkage ratio in transverse direction at 130°C for 1 hour

The microporous polyolefin film has a time to permeate gas (gas permeability) in the range from 50 to 340 sec/(100cc$\times$20 $\mu$m).

The microporous polyolefin film may provide a high quality factor, and the high quality factor of the microporous polyolefin film may be 25 or greater.

The high quality factor of the microporous polyolefin film may be 30 or greater.

The high quality factor of the microporous polyolefin film may be 40 or greater.

The quality factor of the microporous polyolefin film may have, but is particularly limited to, a range of 20~300.

Further, according to the present invention there is provided a method for preparing the microporous polyolefin film by wet process, the method includes: before an extracting process, carrying out a process of compounding and extruding a polyethylene resin and a diluent, a sheet molding process, and a stretching process; and after the extracting process, carrying out a heat treatment process composed of three or more stages, wherein the heat treatment process includes two or more heat stretching stages in the transverse directions and one or more heat relaxing stages between the two or more heat stretching stages in the transverse directions.

Here, in the heat treatment process, an initial stretching stage is carried out at a temperature range from [melting point of the polyethylen resin - 30°C] to [melting point of the polyethylen resin] and an additional stretching stage is carried out at a temperature range from [initial heat stretching temperature] to [initial heat stretching temperature + 20°C].

Hereinafter, the present invention will be described in more detail.

The microporous polyolefin film of the present invention is composed of a single layer or multiple layers, and at least one layer thereof is a polyethylene layer. In order to obtain high puncture strength and permeability, the microporous polyolefin layer of the present invention needs to be composed of at least one layer made of polyethylene, preferably, a single polyethylene layer.

The microporous polyolefin film of the present invention has a film thickness of 5 ~ 40 $\mu$m, and the film thickness thereof is 5 ~ 30 $\mu$m considering film strength, weight lightening of the battery, and safety of the battery, and more preferably, 7-25 $\mu$m. If the film thickness is below 5 $\mu$m, the resistance against external stress during the battery manufacturing process and a needle shape, such as dendrite, generated at the time of charging and discharging the battery may be deteriorated, and thus safety of the battery may not be secured. In addition, if the film thickness is above 40 $\mu$m, permeability may be deteriorated, and the battery may be unnecessarily thickened, resulting in lowering productivity at the time of producing a separator.

The porosity of the microporous polyolefin film is 30~60%, and preferably 40~60% considering film strength and ion conductivity in the battery. If the porosity is below 30%, permeability and electrolyte wettability may be reduced, resulting in deteriorating properties of the battery. If the porosity is above 60%, sufficient strength to secure safety of the battery may not be obtained.

The puncture strength at room temperature is 0.25N/$\mu$M ~ 0.60N/$\mu$m, and more preferably 0.28N/$\mu$m ~ 0.60N/$\mu$m. If the puncture strength is below 0.25N/$\mu$m, the resistance against external damage that may occur in the battery manufacturing procedure may be lowered, failing to secure safety of the battery, and there is a limitation in thinning of the separator and thus there is a limitation in application to the high-capacity battery. If the puncture strength is above 0.60 N/$\mu$m, there is a problem with shrinkage ratio due to excessive orientation of resin.

In the microporous polyolefin film, the polyethylene layer has a maximum pore diameter of 0.083 $\mu$m or less, which is measured by a bubble point method. If the maximum pore diameter is above 0.083 $\mu$m, shutdown properties may be deteriorated and overcharge safety and breakdown voltage properties may be deteriorated, failing to secure safety of the battery.

The puncture strength, permeability, and heat shrinkage ratio in the transverse direction of the separator, which directly affect performance and safety of the battery, are affected by each other. That is, in the case of a separator having high permeability, the puncture strength is low and the heat shrinkage ratio in the transverse direction is high since shrinkage by heat further occurs due to high porosity. Whereas, in the case of a separator having high puncture strength, permeability is not high due to low porosity and the heat shrinkage ratio in the transverse direction is small since shrinkage by heat less occurs. For this reason, in order to determine the quality level of the separator, the puncture strength, permeability, and heat shrinkage ratio need to be all together considered. For this, quality factor (Q) is needed as an index for evaluating the quality level thereof, and the quality factor (Q) is defined by Equation 1 below.

$$[Equation\ 1] \qquad Quality\ Factor\ (Q)\ =\ S\ /\ (P \times HS)$$

S: puncture strength (gf)
P: Time to permeate gas (Gurley, sec/100cc)
HS: shrinkage ratio (%) in transverse direction at 130 °C for 1 hour.

As the puncture strength is greater, the quality factor becomes increased. As the permeability is increased, the gas permeability (Gurley value) becomes reduced, resulting in increasing the quality factor. As the heat shrinkage ratio in the transverse direction is decreased, the quality factor becomes increased. This quality factor is 20gf/(sec/100cc) or greater, preferably 25gf/(sec/100cc) or greater, more preferably 30gf/(sec/100cc) or greater, and more preferably 40gf/(sec/100cc) or greater. If the quality factor is below 20gf/(sec/100cc), the puncture strength is low, the permeability is bad (time to permeate gas is long), or the heat shrinkage ratio is large, and thus performance of the battery may be deteriorated or safety of the battery may not be secured. As a result, those separators cannot be applied to the battery for high-output/high-capacity.

Even though the quality factor is large, a predetermined level of permeability needs to be secured in order to obtain performance of the battery. Therefore, the time to permeate gas(Gurley) is 50 to 340 sec/(100cc×20 $\mu$m). If the time to permeate gas(Gurley) is above 340sec/(100cc×20 $\mu$m), ion conductivity per unit time may not be sufficiently secured, and thus sufficient output may not be obtained. As a result, those separators cannot be applied to the battery for high-output battery. If the time to permeate gas(Gurley) is below 50sec/(100cc×20 $\mu$m), the pore content in the separator is high, and thus safety as a separator for a secondary battery may not be secured.

Next, a method for preparing the microporous polyolefin film will be described.

In the method for preparing a microporous polyolefin film, the method includes: before an extracting process, carrying out a process of compounding and extruding a polyethylene resin and a diluent, a sheet molding process, and a stretching process; and after the extracting process, carrying out a heat treatment process composed of three or more stages, wherein the heat treatment process includes two or more heat stretching stages in the transverse directions and one or more heat relaxing stages between the two or more heat stretching stages in the transverse directions.

Here, in the heat treatment process, an initial stretching stage is carried out at a temperature range from [melting point of the polyethylene resin - 30°C] to [melting point of the polyethylene resin] and an additional heat stretching stage is carried out at a temperature range from [initial heat stretching temperature] to [initial heat stretching temperature + 20°C].

More specifically, a method for preparing a microporous polyolefin film according to the present invention that can attain above object may include:

(a) melting, compounding, and extruding a composition containing a polyolefin resin composition (component I) having a weight average molecular weight of $5 \times 10^4$ or more but less than $2 \times 10^6$ and a diluent (component II), in a weight ratio of 15~50:85~50;

(b) molding the melted material prepared in the process (a) into a form of a sheet through T-die or like;

(c) stretching the sheet molded in the process (b) at a stretching ratio of 4 times or greater each in the machine and transverse directions and a total stretching ratio of 25~80 times, by a sequential or simultaneous stretching method, including a roll or tenter type, to thereby mold the sheet into a form of a film;

(d) extracting the diluent from the film stretched in the process (c), followed by drying; and

(e) performing heat stretching, heat relaxing, and the like on the film dried in the process (d) by a method including a roll or tenter type while one or more heat relaxing stages are carried out between two or more heat stretching stages, to remove residual stress and change a pore structure.

Other processes may be added before, in the middle of, and after the processes (a) to (e), but stretching is necessarily carried out before the extracting and drying processes and heat stretching, heat relaxing, and the like are necessarily carried out after the extracting and drying processes.

Best embodiments of the present invention will be described below in detail.

The molding of the sheet by mixing the polyolefin resin and the diluent is as follows.

In the process of melting, compounding, and extruding the polyolefin resin and the diluent, the sheet composition preferably contains the polyolefin resin composition and the diluent in a weight ratio of 15~50:85~50. If the weight percent of the polyolefin resin is below 15wt.%, it is difficult to mold a uniform sheet due to an excessive amount of low-viscosity diluent; it is not easy to secure mechanical strength due to non-sufficient orientation in the stretching procedure. In addition, the produced sheet is weak and thus there may be problems such as breakage and the like during stretching procedure. Whereas, if the weight percent of the polyolefin resin is above 50 wt.%, the properties for extruding may be deteriorated due to an increase in extrusion load; the permeability of the separator may be significantly lowered; and the sheet becomes hard, resulting in non-uniform stretching.

The polyolefin resin composition may be at least one polyolefin resin alone or a mixture thereof, or a mixed component containing at least one polyolefin resin and an inorganic material or other resins except for the polyolefin resin.

The polyolefin resin used in the polyolefin resin composition may include at least one polyolefin resin selected from polyethylene, polypropylene, poly-4-methyl-1-pentene, and the like, using ethylene, propylene, α-olefin, 4-methyl-1-pentene, and the like, as a monomer or a comonomer. That is, the polyolefin resin may be used alone, or a copolymer or a mixture thereof may be used.

An example of the polyolefin resin suitable in the view of strength, extrusion compoundability, stretchability, and heat resistance characteristics of the final separator may be high-density polyethylene having a comonomer content of less than 2% or a mixture thereof. The polyolefin resin used has a weight average molecular weight of $5 \times 10^4 \sim 2 \times 10^6$, and preferably $1 \times 10^5 \sim 1 \times 10^6$. If the molecular weight of the polyolefin resin is below $5 \times 10^4$, the strength of the separator may be weakened. If the molecular weight thereof is above $2 \times 10^6$, extrusion-compoundability and stretchability may be bad, resulting in deteriorating external appearance and uniformity of the separator, and thus it is difficult to obtain high permeability.

In addition, in order to improve heat resistance and permeability of the separator, the resin composition may selectively contain an inorganic material or a different kind of resin from the polyolefin resin (other resins except for the polyolefin resin) added thereto. This additive may be added in a content of less than 20 wt.% based on the polyolefin resin. More specifically, the use amount thereof may be 0.1~20wt.%. If the use amount thereof is above 20wt.%, mechanical strength of the separator may be rapidly deteriorated, failing to manufacture an excellent quality of separator.

Examples of the inorganic material may be calcium carbonate, silica, barium sulfate, talc, or a mixture thereof.

The different kind of resin from the polyolefin resin may be a polyamide resin (nylon based resin), polybutyleneterephthalate (PBT), polyethyleneterephthalate (PET), polychlorotrifluoroethylene (PCTFE), polyoxymethylene (POM), polyvinylfluoride (PVF), polyvinylidenefluoride (PVDF), polycarbonate, polyalylate, polysulfone, polyetherimide, or a mixture thereof.

In addition, general additives for improving specific functions, such as an antioxidation stabilizer, a UV stabilizer, an antistatic agent, and the like, may be further added to the resin composition within such a range that characteristics of the separator are not seriously deteriorated.

As the diluent used in the present invention, any organic compound that can form a single phase together with the polyolefin resin used in the resin composition at an extrusion temperature. Examples thereof may be aliphatic or cyclic hydrocarbons, such as nonane, decane, decalin, paraffin oil, paraffin wax, and the like; phthalic acid esters, such as, dibutyl phthalate, dioctyl phthalate, and the like; C10~C20 fatty acids, such as, palmitic acid, stearic acid, oleic acid, linoleic acid, linolenic acid, and the like; C10~C20 fatty acid alcohols, such as, palmitic acid alcohol, stearic acid alcohol, oleic acid alcohol, and the like; a mixture thereof; and the like. Preferably, paraffin oil that is harmless to human body and has a high boiling point and less volatile components is appropriate as the diluent, and more preferably, paraffin oil having kinetic viscosity of 20cSt~200cSt at 40°C is appropriate. If the kinetic viscosity of the paraffin oil is above 200cSt, kinetic viscosity in the extruding process thereof is high, causing problems, such as, the load may be increased or surfaces of the sheet and film may be defective. In addition, extraction may be difficult in an extracting process, resulting in decreasing productivity, and decreasing permeability due to residual oil. If the kinetic viscosity of the paraffin oil is below 20cSt, compounding may be difficult at the time of extruding process, due to a viscosity difference between polyolefin melted and paraffin oil in the extruder.

The sheet composition is melted and compounded by using a biaxial compounder, a compounder, a Banbury mixer, or the like, which is designed to compound the polyolefin resin used in the resin composition and the diluent, to thereby obtain a single phase mixture. As the extrusion temperature, appropriate is a temperature at which the used resin is present at a complete liquid phase and in a single phase together with the diluent (30°C or higher as compared with resin melt temperature), and the temperature may be preferably 160~300°C, and more preferably 180~250°C. This mixture is molded into a form of a sheet while being extruded through the T-die and then cooled, and then molded into a solid phase sheet by a casting or calendaring method using a water cooling or air cooling manner. The polyolefin and the diluent may be previously blended and then input into a compounder, or may be respectively input from separated feeders.

The sheet produced in the foregoing process is stretched at a stretching ratio of 4 times or greater each in the machine and transverse directions and a total stretching ratio of 25~80 times, by a sequential or simultaneous stretching method, including a roll or tenter type while heat is applied thereto. If the stretching ratio in one direction is below 4 times, the orientation of polyolefin in the separator may not be sufficient, failing to secure high strength. In addition, if the total stretching ratio is below 25 times, streching may not occur completely and physical properties may be bad. If the total stretching ratio is above 80 times, breakage is likely to occur during the stretching process and the shrinkage ratio of the final product may be increased. The temperature for carrying out stretching is appropriate from [melting temperature of polyolefin resin - 40°C] to

**[0047]** [melting temperature of polyolefin resin]. In the case where several kinds of resins are mixed in the polyolefin resin, the melting temperature of a resin, of which the content is the largest, is designated as melting temperature of the polyolefin resin. At temperatures of below the [melting temperature of polyolefin resin - 40°C], mobility of polymer chains in the polyolefin resin is not secured, and thus, non-uniform stretching, breakage, and the like may occur during the stretching procedure, failing to secure stretching stability, and permeability of the final separator may be low, failing to manufacture a high-quality separator. In addition, at temperatures above the [melting temperature of polyolefin resin], sufficient tension is not applied to the film due to excessive heat, and thus excessive stretching may occur, failing to secure uniformity in product quality, and the resin is not sufficiently oriented in the sheet, resulting in lowering strength of the final separator, and thus, it is impossible to manufacture a high-safety separator for a battery. The stretching of the polyethylene resin is preferably carried out at a temperature range of 100°C ~ 140°C.

The film stretched by the foregoing process is allowed to extract the diluent therein by using an organic solvent, and then dried. As the organic solvent usable in the present invention, any solvent that can extract the diluent used in resin extrusion may be used without particular limitation. Preferably, methyl ketone, methylene chloride, hexane, or the like, which has high extracting efficiency and enables fast drying, may be used. As a method for the extraction, all of the solvent extracting methods such as an immersion method, a solvent spray method, an ultrasonic method, and the like, may be respectively or complexly used. In addition, the content of residual diluent at the time of extraction needs to be 2wt.% or less. If the content of the residual diluent is above 2wt.%, physical properties may be deteriorated and permeability of the film may be reduced. The amount of the residual diluent (extraction ratio) largely depends on the extracting temperature and the extracting time. The extracting temperature is favorably high in order to increase solubility of the diluent and the solvent, but is preferably 40°C considering safety due to boiling of solvent. The extracting time is varied according to the thickness of the film produced, but is appropriate for 2 ~ 4 minutes in the case where a general microporous film having a thickness of 10~30 $\mu$m is produced. The film where the diluent is replaced with the organic solvent through the extraction procedure is finally dried by drying an organic solvent through a drying process, to prepare a microporous film. In these extraction and drying procedures, the properties of shrinkage ratio and physical properties may be controlled by applying tension.

A heat treatment process is carried out to remove residual stress of the dried film to thereby reduce the shrinkage ratio of the final product and change the pore structure. The heat treatment process may be classified into stages of heat stretching, heat setting, heat relaxing, and the like.

In the heat stretching stage, stretching is carried out sequentially and simultaneously in the machine and/or transverse directions using roll or tenter type equipment while heat is applied, and thus, the pore structure of the separator is changed. Here, the stretching ratio is preferably 1.01 times ~ 2.0 times each in the machine and transverse directions. If the stretching ratio is above 2.0 times, the separator may be broken during the stretching procedure due to excessive stretching, and the pore size and the shrinkage ratio of the separator may be excessively increased.

In the heat setting stage, the heat is applied to the film while the film is forcibly held by roll or tenter type equipment such that the dimensions in length and width directions are not changed, to thereby remove the residual stress in the film.

In the heat relaxing stage, while the heat is applied to the film by using roll or tenter type equipment, the length and/or width of the film are reduced by 95% to 50% of the length and/or width compared with length and/or width before the heat relaxing ([length/width after heat relaxing] ÷ [length/width before heat relaxing]), in the machine direction (MD) and the transverse direction (TD), sequentially or simultaneously, to thereby reduce the residual stress and the shrinkage ratio. The shrinking (relaxing) of 95% or less needs to be carried out in order to sufficiently reduce the shrinkage ratio of the film. If the shrinking (relaxing) of below 50% is carried out, the low shrinkage ratio may be obtained but the permeability may be seriously decreased.

The heat treatment process of the present invention needs to be carried out in three or more stages, and here includes two or more heat stretching stages in the transverse directions. At least one or more heat relaxing stages is necessarily included between the heat stretching stages in the transverse directions. In the case where added heat stretching for changing the pore structure is carried out after sufficiently removing the stress of the resin in the separator, which is generated in the stretching stage, there can be prepared a separator having excellent permeability and low shrinkage ratio.

The heat treatment process needs to be carried out between [melting temperature of the polyethylene resin - 30°C] and [melting temperature of the polyethylene resin]. In the case where several kinds of resins are mixed, the melting temperature of a resin of which the content is the largest in the resins is designated as the melting temperature of the polyolefin resin. In the case where the heat treatment process is carried out at a temperature of below [melting temperature of the polyethylene resin - 30°C], heat stretching, heat setting, and heat relaxing are carried out while mobility of the chains in the resin is not secured, and thus, the stress in the resin may not be sufficiently removed, resulting in increasing the shrinkage ratio, and film breakage may occur in the heat stretching stage, and the pore size may be excessively enlarged. In the case where the heat treatment process is carried out at a temperature of above [melting temperature of the polyethylene resin], the stress is sufficiently relaxed since the chains in the resin retain sufficient mobility, resulting in decreasing the shrinkage ratio, but the pore structure may be collapsed and thus excessively low permeability may be obtained, failing to manufacture a high-quality separator. Conventionally, the temperature for heat treatment of the high-density polyethylene is preferably 110°C~140°C. After the initial heat stretching stage, at least one additional heat stretching stage needs to be carried out at a temperature higher than the temperature for the initial heat stretching but lower than [temperature for the initial heat stretching + 20°C]. In addition, the temperature for heat stretching needs to be [melting temperature of polyethylene resin + 10°C] or lower. In the case where additional heat stretching is carried out at a temperature equal to or lower than the temperature for the initial heat stretching, the shrinkage ratio and the pore size may be excessively increased. In the case where additive heat stretching is carried out at a temperature higher than [temperature for the initial heat stretching + 20°C] or higher than [melting temperature of polyethylene resin + 10°C], the stress generated in the initial heat stretching procedure is sufficiently relaxed, resulting in decreasing the shrinkage ratio, but the pore structure formed in the initial stretching procedure may be collapsed, and thus it is difficult to form a pore structure retaining excellent permeability. In addition, the time for the heat treatment process may be relatively shortened in the case where the temperature for heat treatment is high, and relatively lengthened in the case where the temperature for heat treatment is low. Preferably, the time for heat treatment is approximately 10 seconds ~ 2 minutes.

The stretching, extracting, and heat treatment processes are preferably carried out in a continuous process.

[Example]

The present invention will be described in more detail with reference to the following Examples, but the scope of the present invention is not limited thereto.

1. Molecular Weight

Molecular weight of the polyolefin resin was determined by using a high-temperature gel permeation chromatography (GPC) from Polymer Laboratory Company, using 1,2,4-trichlorobenzene(TCB) as a solvent, at 140°C, and polystyrene was used as a standard sample for molecular weight measurement

2. Analysis of Thermal Characteristics

Melting temperature (Tm) of the polyolefin resin was analyzed by differential scanning calorimetry (DSC) (DSC-822E, Mettler Toledo Company). For analysis of the polyolefin resin, a sample with a weight of 5 mg was temperature-raised at a scanning rate of 10°C/min until the resin was completely melted, and then maintained at this temperature to thereby be in a complete molten state. Then the temperature was lowered to 0°C at a scanning rate of 10°C/min to crystallize the molten material into a complete solid state, and then the melting temperature of the resin was determined while the temperature was raised at a scanning rate of 10°C/min.

3. Film Thickness

Thickness of the final product was measured by using TESA Mu-Hite Electronic Height Gauge from TESA Company at a measuring pressure of 0.63N.

4. Puncture Strength

A pin with a diameter of 1 mm and a radius of curvature of 0.5 mm was installed at the universal testing machine (UTM) from Instron Company, and strength of the separator was measured when the separator was broken by the pin at a movement rate of 120mm/min at a temperature of 23°C. Here, the measured load was expressed as the gf unit, and the the value standardized by thickness was expressed as N/$\mu$m.

5. Gas Permeability

Time to permeate gas (Gas permeability) was measured according to JIS P8117 by using Gurley type densometer (G-B2C) from Toyoseiki Company.

6. Shrinkage ratio

The separator was cut into a size of 15cm × 15cm, which was marked at an interval of 10cm in the machine direction and the transverse direction. The separator was inserted between papers, and placed inside an oven (OF-12GW, JEIO TECH Company) of which a temperature was stabilized at 130°C, followed by being left for 60 minutes. Then, the change in interval was measured and the shrinkage ratio was calculated. The shrinkage ratio was calculated by the following equation.

$$\text{Shrinkage ratio (\%)} = 100 \times (\text{initial interval} - \text{interval after being left at } 130°C) / \text{initial interval}$$

$$\text{Shrinkage ratio} = (\text{initial interval} - \text{interval after being left at } 130°C) / \text{initial interval}$$

7. Porosity

Porosity was determined by calculating the volume of pore in the separator. A sample was cut into a rectangle (thickness: T $\mu$m) with a size of A cm × B cm, and weighed, and thus the porosity was calculated by a ratio of weight of resin and weight of separator (M g), the resin and the separator having the same volume. Mathematical Equation therefor is as follows.

$$Porosity\ (\%)\ =\ 100\times\{1-M\times10000/(A\times B\times T\times\rho)\}$$

Wherein, $\rho$ (g/cm³) is density of the resin.

8. Maximum Pore Diameter

Maximum pore diameter was measured by a porometer (CFP-1500-AEL, PMI Company) according to ASTM F316-03. The maximum pore diameter was measured by a bubble point method. For measurement of pore diameter, Galwick solution (surface tension:15.9dyne/cm) supplied from PMI Company was used.

9. Overcharge Test

The overcharge test for confirming safety of the separator was conducted by the following method. $LiCoO_2$ was coated on both surfaces of an aluminum thin film to prepare cathodes of 112mm × 77mm, and graphite was coated on both surfaces of a copper thin film to prepare anodes of 115mm × 77mm. Electrode taps were welding-bonded to the cathodes and the anodes. Then, the cathodes, anodes, separators were stacked in the following sequence, which was then put in an aluminum pouch coated with plastic, and compressed by using a press.
(C/2) / S / A / S / C / S / A / S - / C / S / A / S / (C/2)
(C/2): Cathode of which only one surface is coated
C: Cathode of which both surfaces are coated
A: Anode of which both surfaces are coated
S: Separator
An electrolyte injected into a battery cell is prepared by dissolving $LiPF_6$ in a solution where ethylene carbonate and ethyl methyl carbonate are mixed at a weight ratio of 3:4 such that the concentration of $LiPF_6$ was 1.4mol/L. The electrolyte is injected into the aluminum bag where the electrodes and separators are contained, and then the aluminum bag was sealed, thereby manufacturing a lithium ion battery. All of these processes were carried out in a glove box in order to prevent infiltration of moisture.

The lithium ion battery manufactured by the foregoing method was charged and discharged in one cycle of charging up to 4.2V by current of 200mA and discharging down to 3V by current of 200mA. Then, the lithium ion battery was charged up to 6V by applying current of 1000mA, and then stayed until charging current is 30 mA or lower while the voltage was uniformly maintained. Then, the voltage was boosted up to 5.2V by current of 1000mA, and then the external appearance of the battery and temperature change of the battery were observed while the voltage was maintained, so that safety against overcharge of the lithium ion battery was confirmed. If the overcharge safety failed, the battery may be exploded or ignited, and the time to when the explosion or ignition occurs may be quickened.

[Example 1]

High-density polyethylene having a weight average molecular weight of $3.0\times10^5$ and a melting temperature of 135°C was used for component I, and paraffin oil having kinetic viscosity at 40°C of 160cSt was used for component II. The weight percents of component I and component II were 30% and 70%, respectively.

The foregoing composition was extruded at 230°C by using a biaxial compounder, and molded into a sheet by using T-die and a casting roll. This sheet was sequentially stretched at a stretching ratio of 7 times at 113°C in a machine direction and 6.5 times at 128°C in a transverse direction. While tension is applied to the stretched film, the diluent was extracted from the stretched film by using methylene chloride of 25~30°C. A heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Example 2]

High-density polyethylene having a weight average molecular weight of $3.0\times10^5$ and a melting temperature of 135°C was used for component I, and paraffin oil having kinetic viscosity at 40°C of 160cSt was used for component II. The weight percents of component I and component II were 30% and 70%, respectively.

The foregoing composition was extruded at 230°C by using a biaxial compounder, and molded into a sheet by using T-die and a casting roll. This sheet was sequentially stretched at a stretching ratio of 6 times at 118°C in a machine direction and 6.5 times at 125°C in a transverse direction. While tension is applied to the stretched film, the diluent was extracted from the stretched film by using methylene chloride of 25~30°C. A heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Example 3]

High-density polyethylene having a weight average molecular weight of $3.0 \times 10^5$ and a melting temperature of 135°C was used for component I, and paraffin oil having kinetic viscosity at 40°C of 160cSt was used for component II. The weight percents of component I and component II were 28% and 72%, respectively.

The foregoing composition was extruded at 230°C by using a biaxial compounder, and molded into a sheet by using T-die and a casting roll. This sheet was sequentially stretched at a stretching ratio of 7 times at 118°C in a machine direction and 7 times at 126°C in a transverse direction. While tension is applied to the stretched film, the diluent was extracted from the stretched film by using methylene chloride of 25~30°C. A heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Example 4]

High-density polyethylene having a weight average molecular weight of $3.8 \times 10^5$ and a melting temperature of 135°C was used for component I, and a mixture of paraffin oil having kinetic viscosity at 40°C of 160cSt and dioctyl phthalate at a weight ratio of 2:1 was used for component II. The weight percents of component I and component II were 30% and 70%, respectively.

The foregoing composition was extruded at 250°C by using a biaxial compounder, and molded into a sheet by using T-die and a casting roll. This sheet was simultaneously stretched at a stretching ratio of 6 times at 122°C in each of machine direction and transverse direction. While tension is applied to the stretched film, the diluent was extracted from the stretched film by using methylene chloride of 25~30°C. A heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 1]

High-density polyethylene having a weight average molecular weight of $3.0 \times 10^5$ and a melting temperature of 135°C was used for component I, and paraffin oil having kinetic viscosity at 40°C of 160cSt was used for component II. The weight percents of component I and component II were 25% and 75%, respectively.

The foregoing composition was extruded at 230°C by using a biaxial compounder, and molded into a sheet by using T-die and a casting roll. This sheet was sequentially stretched at a stretching ratio of 6.5 times at 110°C in a machine direction and 6.5 times at 125°C in a transverse direction. While tension is applied to the stretched film, the diluent was extracted from the stretched film by using methylene chloride of 25~30°C. A heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 2]

High-density polyethylene having a weight average molecular weight of $3.0 \times 10^5$ and a melting temperature of 135°C was used for component I, and paraffin oil having kinetic viscosity at 40°C of 160cSt was used for component II. The weight percents of component I and component II were 30% and 70%, respectively.

The foregoing composition was extruded at 230°C by using a biaxial compounder, and molded into a sheet by using T-die and a casting roll. This sheet was sequentially stretched at a stretching ratio of 6.5 times at 115°C in a machine direction and 6.5 times at 126°C in a transverse direction. While tension is applied to the stretched film, the diluent was extracted from the stretched film by using methylene chloride of 25~30°C. A heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 3]

Extruding, sheet molding, stretching, and the like were carried out in the same conditions as Comparative Example 2, but only the heat treatment process was carried out differently. The heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 4]

Extruding, sheet molding, stretching, and the like were carried out in the same conditions as Comparative Example 2, but only the heat treatment process was carried out differently. The heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 5]

Extruding, sheet molding, stretching, and the like were carried out in the same conditions as Comparative Example 2, but only the heat treatment process was carried out differently. The heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 6]

Extruding, sheet molding, stretching, and the like were carried out in the same conditions as Comparative Example 2, but only the heat treatment process was carried out differently. The heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Comparative Example 7]

High-density polyethylene having a weight average molecular weight of $3.8 \times 10^5$ and a melting temperature of 135°C was used for component I, and a mixture of paraffin oil having kinetic viscosity at 40°C of 160cSt and dioctyl phthalate at a weight ratio of 1:1 was used for component II. The weight percents of component I and component II were 25% and 75%, respectively.

The foregoing composition was extruded at 250°C by using a biaxial compounder, and passed though a section thereof set at 185°C to induce liquid-liquid phase separation, and molded into a sheet by using T-die and a casting roll. Here, the sheet extruded with a width of 350mm was promptly casted in the transverse direction to have a width of 300mm (14% reduction). This sheet was sequentially stretched at a stretching ratio of 8.5 times at 115°C in the machine direction and 6.5 times at 128°C in the transverse direction. While tension was applied to the stretched film, shrinking in the machine direction was prevented and the width in the transverse direction was reduced by about 10%, and the diluent was extracted from the stretched film by using methylene chloride of 25~30°C. Heat treatment process was carried out in the transverse direction. In the heat treatment process, temperatures for stages, heat stretching ratio, and heat relaxing ratio were shown in Table 1 below, and each stage was carried out for 5 seconds. The obtained physical properties of the separator were tabulated in Table 2 below. (Ratio means ratio of the final width in the previous stage and the final width in the current stage.)

[Table 1]

| | | Stage 1 | Stage 2 | Stage 3 | Stage 4 | Stage 5 | Stage | Stage | Stage |
|---|---|---|---|---|---|---|---|---|---|
| Example 1 | Stage (ratio) | Heat Setting, (100%) | Heat Stretching (130%) | Heat Relaxing (92.3%) | Heat Stretching (140%) | Heat Relaxing (78.6%) | | | |
| | Temp. | 128°C | 126°C | 128°C | 130°C | 131°C | | | |
| Example 2 | Stage (ratio) | Heat Stretching (120%) | Heat Setting (100%) | Heat Stretching (130%) | Heat Relaxing (92.3%) | Heat Stretching (150%) | Heat Setting (100%) | Heat Relaxing (73.3%) | Heat Setting (100%) |
| | Temp. | 128°C | 128°C | 125°C | 129°C | 132°C | 132°C | 131°C | 131°C |
| Example 3 | Stage (ratio) | Heat Relaxing (90%) | Heat Setting (100%) | Heat Stretching (150%) | Heat Relaxing (80%) | Heat Setting (100%) | Heat Stretching (160%) | Heat Relaxing (81.3%) | |
| | Temp. | 128°C | 128°C | 127°C | 128°C | 129°C | 130°C | 131°C | |
| Example 4 | Stage (ratio) | Heat Stretching (150%) | Heat Relaxing (86.7%) | Heat Setting (100%) | Heat Stretching (140%) | Heat Setting (100%) | Heat Relaxing (85.7%) | Heat Setting (100%) | |
| | Temp. | 125°C | 126°C | 127°C | 131°C | 130°C | 130°C | 130°C | |
| Comparative Example 1 | Stage (ratio) | Heat Relaxing (90%) | Heat Setting (100%) | Heat Stretching (145%) | Heat Setting (100%) | | | | |
| | Temp. | 129°C | 129°C | 129°C | 129°C | | | | |
| Comparative Example 2 | Stage (ratio) | Heat Stretching (150%) | Heat Relaxing (80%) | Heat Setting (100%) | | | | | |
| | Temp. | 130°C | 130°C | 131°C | | | | | |
| Comparative Example 3 | Stage (ratio) | Heat Setting (100%) | Heat Relaxing (90%) | Heat Setting (100%) | | | | | |
| | Temp. | 126°C | 128°C | 129°C | | | | | |
| Comparative Example 4 | Stage (ratio) | Heat Relaxing (90%) | Heat Stretching (130%) | Heat Stretching (140%) | Heat Relaxing (78.5%) | Heat Setting (100%) | | | |
| | Temp. | 128°C | 128°C | 131°C | 129°C | 128°C | | | |
| Comparative Example 5 | Stage (ratio) | Heat Stretching (130%) | Heat Relaxing (84.6%) | Heat Setting (100%) | Heat Stretching (140%) | Heat Relaxing (78.6%) | | | |
| | Temp. | 100°C | 120°C | 125°C | 140°C | 129°C | | | |

(continued)

| | | Stage 1 | Stage 2 | Stage 3 | Stage 4 | Stage 5 | Stage | Stage | Stage |
|---|---|---|---|---|---|---|---|---|---|
| Comparative Example 6 | Stage (ratio) | Heat Setting (100%) | Heat Stretching (140%) | Heat Setting (100%) | Heat Relaxing (78.5%) | Heat Stretching (130%) | Heat Setting (100%) | Heat Relaxing (84.6%) | |
| | Temp. | 130°C | 130°C | 131°C | 131°C | 125°C | 125°C | 127°C | |
| Comparative Example 7 | Stage (ratio) | Heat Setting (100%) | Heat Stretching (145%) | Heat Relaxing (65.5%) | | | | | |
| | Temp. | 129°C | 129°C | 129°C | | | | | |

[Table 2]

|  | Thickness ($\mu$m) | Puncture Strength (gf) | Puncture Strength (N/$\mu$m) | Time to permeate gas 100cc) | Shrin kage ratio in Transverse Direction (%) | Porosity (%) | Maximum Pore Diameter Size ($\mu$m) | Quality Factor (gf/(sec/100cc) ) | Overcharge test |
|---|---|---|---|---|---|---|---|---|---|
| Example 1 | 16 | 468 | 0.29 | 138 | 8.2 | 40 | 0.070 | 41.3 | Pass |
| Example 2 | 20 | 728 | 0.36 | 223 | 7.7 | 45 | 0.075 | 42.4 | Pass |
| Example 3 | 16 | 571 | 0.35 | 123 | 11.1 | 49 | 0.083 | 41.8 | Pass |
| Example 4 | 22 | 762 | 0.34 | 345 | 4.1 | 38 | 0.063 | 53.9 | Pass |
| Comparative Example 1 | 20 | 367 | 0.18 | 109 | 36.2 | 57 | 0.013 | 9.3 | Fail |
| Comparative Example 2 | 16 | 473 | 0.29 | 184 | 21.3 | 44 | 0.072 | 12.1 | Pass |
| Comparative Example 3 | 15 | 474 | 0.31 | 431 | 8.1 | 35 | 0.057 | 13.5 | Pass |
| Comparative Example 4 | 18 | 514 | 0.28 | 151 | 26.4 | 47 | 0.080 | 12.9 | Pass |
| Comparative Example 5 | 12 | 391 | 0.32 | 591 | 6.2 | 31 | 0.055 | 10.7 | Pass |
| Comparative Example 6 | 18 | 477 | 0.26 | 135 | 30.5 | 51 | 0.089 | 11.6 | Pass |
| Comparative Example 7 | 18 | 460 | 0.25 | 253 | 15 | 41 | 0.063 | 12.1 | Pass |

As set forth above, the microporous polyolefin film according to the present invention can retain high puncture strength and permeability. Further, according to the present invention, there can be provided a microporous polyolefin film having excellent mechanical strength, permeability, heat shrinkage characteristics, by optimizing the heat treatment process carried out after removing the diluent in the wet procedure for enabling manufacture of a microporous film having excellent physical properties and quality factor among methods for preparing the microporous polyolefin film.

## Claims

1. A microporous polyolefin film where one or more layers are laminated, wherein the microporous polyolefin film comprises a polyethylene layer having a maximum pore diameter of 0.083 $\mu$m or less, which is measured by a bubble point method; wherein the microporous polyolefin film has a thickness of 5-40 $\mu$m, a porosity of 30~60%, and a puncture strength of 0.25N/$\mu$m to 0.60N/$\mu$m; wherein the microporous film has a time to permeate gas in the range from 50 to 340 sec/(100 cc x 20 $\mu$m); and wherein a quality factor of the microporous film, which is defined by Equation 1 below, is 20gf/(sec/100cc) or greater:

$$[Equation\ 1]\qquad Quality\ Factor\ (Q)\ =\ S\ /\ (P \times HS)$$

S: puncture strength (gf)
P: time to permeate gas (Gurley, sec/100cc)
HS: shrinkage ratio (%) in transverse direction at 130°C for 1 hour.

2. The microporous polyolefin film of claim 1, wherein the puncture strength of the microporous polyolefin film is 0.28N/$\mu$m to 0.60N/$\mu$m.

3. The microporous polyolefin film of claim 1, wherein the quality factor of the microporous polyolefin film is 25gf/(sec/100cc) or greater.

4. The microporous polyolefin film of claim 1, wherein the quality factor of the microporous polyolefin film is 30gf/(sec/100cc) or greater.

5. The microporous polyolefin film of claim 1, wherein the quality factor of the microporous polyolefin film is 40gf/(sec/100cc) or greater.

6. A method for preparing microporous polyolefin film by wet process, the method comprising:

   before an extracting process, carrying out a process of compounding and extruding a polyethylene resin and a diluent, a sheet molding process, and a stretching process; and
   after the extracting process, carrying out a heat treatment process composed of three or more stages,
   wherein the heat treatment process includes two or more heat stretching stages in the transverse directions and one or more heat relaxing stages between the two or more heat stretching stages in the transverse directions,
   wherein in the heat treatment process, an initial stretching stage is carried out at a temperature range from [melting temperature of the polyethylene resin - 30°C] to [melting temperature of the polyethylene resin] and an additional heat stretching stage is carried out at a temperature range from [initial heat stretching temperature] to [initial heat stretching temperature + 20°C].

## Patentansprüche

1. Mikroporöse Polyolefinfolie, bei der eine oder mehrere Schichten laminiert sind, wobei die mikroporöse Polyolefinfolie eine Polyethylenschicht mit einem maximalen Porendurchmesser von 0,083 $\mu$m oder weniger umfasst, der durch ein Blasenpunktverfahren ("bubble point method") gemessen wird; wobei die mikroporöse Polyolefinfolie eine Dicke von 5~40 $\mu$m, eine Porosität von 30~60% und eine Durchstoßfestigkeit von 0,25 N/$\mu$m bis 0,60 N/$\mu$m aufweist; wobei die mikroporöse Folie eine Zeit für das Durchdringen von Gas im Bereich von 50 bis 340 s/(100 cm$^3$ $\times$ 20 $\mu$m) aufweist; und wobei ein Qualitätsfaktor der mikroporösen Folie, der durch die nachstehende Gleichung 1 definiert ist, 20 gf/(sec/100 cm$^3$) oder größer ist:

[Gleichung 1] Qualitätsfaktor (Q) = S / (P×HS)

S: Durchstoßfestigkeit (gf)
P: Zeit zum Durchdringen von Gas (Gurley, sec/100 cm$^3$)
HS: Schrumpfungsrate (%) in Querrichtung bei 130 °C für 1 Stunde.

**2.** Mikroporöse Polyolefinfolie nach Anspruch 1, wobei die Durchstoßfestigkeit der mikroporösen Polyolefinfolie 0,28 N/$\mu$m bis 0,60 N/$\mu$m beträgt.

**3.** Mikroporöse Polyolefinfolie nach Anspruch 1, wobei der Qualitätsfaktor der mikroporösen Polyolefinfolie 25 gf/(sec/100 cm$^3$) oder mehr beträgt.

**4.** Mikroporöse Polyolefinfolie nach Anspruch 1, wobei der Qualitätsfaktor der mikroporösen Polyolefinfolie 30 gf/(sec/100 cm$^3$) oder mehr beträgt.

**5.** Mikroporöse Polyolefinfolie nach Anspruch 1, wobei der Qualitätsfaktor der mikroporösen Polyolefinfolie 40 gf/(sec/100 cm$^3$) oder mehr beträgt.

**6.** Verfahren zur Herstellung einer mikroporösen Polyolefinfolie durch ein Nassverfahren, wobei das Verfahren umfasst:

vor einem Extraktionsverfahren die Durchführung eines Verfahrens zum Compoundieren und Extrudieren eines Polyethylenharzes und eines Verdünnungsmittels, eines Folienformverfahrens und eines Streckverfahrens; und nach dem Extraktionsverfahren die Durchführung eines aus drei oder mehr Stufen bestehenden Wärmebehandlungsverfahrens,
wobei das Wärmebehandlungsverfahren zwei oder mehrere Wärmeausdehnungsstufen in den Querrichtungen und eine oder mehrere Wärmeentspannungsstufen zwischen den zwei oder mehreren Wärmeausdehnungsstufen in den Querrichtungen umfasst,
wobei bei dem Wärmebehandlungsverfahren eine anfängliche Ausdehnungsstufe bei einem Temperaturbereich von [Schmelztemperatur des Polyethylenharzes -30°C] bis [Schmelztemperatur des Polyethylenharzes] durchgeführt wird und eine zusätzliche Wärmeausdehnungsstufe bei einem Temperaturbereich von [Anfangs-Wärmeausdehnungstemperatur] bis [Anfangs-Wärmeausdehnungstemperatur +20°C] durchgeführt wird.

**Revendications**

**1.** Film de polyoléfine microporeux, dans lequel une ou plusieurs couches sont stratifiées, dans lequel le film de polyoléfine microporeux comprend une couche en polyéthylène ayant un diamètre des pores maximal de 0,083 $\mu$m ou inférieure, qui est mesuré au moyen d'un procédé de point de bulle ; dans lequel le film de polyoléfine microporeux a une épaisseur de 5-40 $\mu$m, une porosité de 30-60%, et une résistance à la perforation comprise entre 0,25N/$\mu$m et 0,60N/$\mu$m ; dans lequel le film microporeux a un temps pour filtrer un gaz dans une plage comprise entre 50 et 340 sec/(100 cc x 20 $\mu$m); et dans lequel un facteur de qualité du film microporeux, qui est défini par l'équation 1 suivante, est 20gf/(sec/100cc) ou supérieur :

[Équation 1] Facteur de qualité (Q) = S/(PxHS)

S : résistance à la perforation (gf)
P : temps pour filtrer un gaz (Gurley, sec/100cc)
HS : rapport de rétrécissement (%) dans le sens transversal à 130°C pendant 1 heure.

**2.** Film de polyoléfine microporeux selon la revendication 1, dans lequel la résistance à la perforation du film de polyoléfine microporeux est comprise entre 0,28N/$\mu$m et 0,60N/$\mu$m.

**3.** Film de polyoléfine microporeux selon la revendication 1, dans lequel le facteur de qualité du film de polyoléfine microporeux est 25gf/(sec/100cc) ou supérieur.

**4.** Film de polyoléfine microporeux selon la revendication 1, dans lequel le facteur de qualité du film de polyoléfine microporeux est 30gf/(sec/100cc) ou supérieur.

**5.** Film de polyoléfine microporeux selon la revendication 1, dans lequel le facteur de qualité du film de polyoléfine microporeux est 40gf/(sec/100cc) ou supérieur.

**6.** Procédé de préparation du film de polyoléfine microporeux selon un procédé par voie humide, le procédé comprenant :

avant un procédé d'extraction, la réalisation d'un procédé de compoundage et extrusion d'une résine de polyéthylène et d'un diluant, un procédé de moulage d'une feuille, et un procédé d'étirage ; et
après le procédé d'extraction, la réalisation d'un procédé de traitement thermique composé de trois ou plusieurs étapes,
dans lequel le procédé de traitement thermique comporte deux ou plusieurs étapes d'étirage à chaud dans les sens transversaux et une ou plusieurs étapes de relaxation à chaud entre les deux ou plusieurs étapes d'étirage à chaud dans les sens transversaux,
dans lequel, dans le procédé de traitement thermique, une étape d'étirage initiale est mise en place dans une plage de température comprise entre [la température de fusion de la résine de polyéthylène - 30°C] et [la température de fusion de la résine de polyéthylène] et une étape d'étirage à chaud supplémentaire est mise en place dans une plage de température comprise entre [la température d'étirage à chaud initiale] et [la température d'étirage à chaud initiale + 20°C].

**EP 2 612 702 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20060103932